(19) Europäisches Patentamt
European Patent Office
Office européen des brevets

(11) Numéro de publication: **0 191 666**
**B1**

(12) # FASCICULE DE BREVET EUROPÉEN

(45) Date de publication du fascicule du brevet: **12.07.89**

(51) Int. Cl.⁴: **B 32 B 17/10**, C 03 C 27/12

(21) Numéro de dépôt: **86400069.0**

(22) Date de dépôt: **14.01.86**

(54) **Procédé et dispositif pour la fabrication d'un vitrage de sécurité.**

(30) Priorité: **15.01.85 FR 8500496**

(43) Date de publication de la demande:
**20.08.86 Bulletin 86/34**

(45) Mention de la délivrance du brevet:
**12.07.89 Bulletin 89/28**

(84) Etats contractants désignés:
**BE DE FR GB IT SE**

(56) Documents cité:
**EP-A-0 131 523**
**EP-A-0 144 065**
**FR-A-162 756**
**FR-A-2 059 907**
**FR-A-2 320 563**
**FR-A-2 398 606**
**GB-A-1 311 464**
**US-A-3 671 370**

(73) Titulaire: **SAINT- GOBAIN VITRAGE, Les Miroirs 18, avenue d'Alsace, F-92400 Courbevoie (FR)**

(72) Inventeur: **Bravet, Jean- Louis, 5 Avenue du Moulin, F-60150 Thourotte (FR)**
Inventeur: **de Toytot, François, 15 Rue de Vogué, F-60150 Thourotte (FR)**

(74) Mandataire: **Muller, René, SAINT- GOBAIN RECHERCHE 39, quai Lucien Lefranc, F-93304 Aubervilliers (FR)**

EP 0 191 666 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1989

**Description**

La présente invention est relative à la fabrication d'un vitrage feuilleté de sécurité comprenant une feuille de verre et au moins une couche de matière plastique présentant des propriétés d'absorbeur d'énergie.

Des vitrages comprenant une feuille de verre et au moins une couche de matière plastique ont déjà été décrits dans de nombreuses publications.

Ainsi la publication du brevet français 2 398 606 décrit un vitrage feuilleté comprenant une feuille de verre, une couche de matière plastique ayant des propriétés d'absorbeur d'énergie formée d'un polyuréthane thermoplastique obtenu à partir d'au moins un diisocyanate aliphatique et d'au moins un polyesterdiol ou polyétherdiol, le rapport des groupements équivalents NCO aux groupements équivalents OH étant de préférence compris entre 0,8 et 0,9, et une couche de matière plastique ayant des propriétés de surface notamment de bonnes résistances à la rayure et à l'abrasion. Ce vitrage conserve ses bonnes propriétés optiques et l'adhésion reste bonne entre les élémets, dans des conditions de température et d'humidité très variables, mais les propriétés biomécaniques du vitrage et notamment la résistance aux chocs ne sont pas entièrement satisfaisantes.

On connaît encore d'après la publication de brevet européen 0 054 491 un vitrage feuilleté ayant la structure décrite précédemment et pour lequel la couche intercalaire de matière plastique ayant des propriétés d'absorbeur d'énergie est à base d'un polyuréthane-polyurée présentant une structure linéaire et une teneur en groupe urée de l'ordre de 1 à 20 % en poids, ce polyuréthane-polyurée étant le produit réactionnel d'un prépolymère issu d'un composant polyol et d'un composant isocyanate pris en excès, avec au moins une diamine. Cette couche intercalaire est fabriquée par extrusion d'une résine polyuréthanpolyurée ou par coulée d'une solution de ladite résine et évaporation des solvants, ce qui dans un cas comme dans l'autre nécessite plusieurs opérations successives.

Dans le cas de l'extrusion, il est nécessaire d'effectuer une synthèse préalable de la résine pour pouvoir l'extruder.

En outre pour obtenir la qualité optique nécessaire à l'application envisagée, il faut "repasser" la feuille. Cette qualité optique obtenue ne se maintient d'ailleurs généralement pas dans le temps car la matière plastique garde en mémoire son procédé de fabrication et la qualité obtenue par le "repassage" s'amenuise avec le temps.

De plus, l'extrusion de la couche ayant des propriétés d'absorbeur d'énergie pose un problème d'assemblage avec la couche autocicatrisable.

Dans le cas de la coulée d'une solution, il est également nécessaire d'effectuer une synthèse préalable de la résine. Il faut ensuite dissoudre celle-ci dans un solvant puis couler la solution et évaporer le solvant de façon répétitive pour l'obtention d'une couche d'épaisseur compatible avec le caractère absorbeur d'énergie recherché. L'évaporation du solvant constitue en outre une source de nuisance.

L'invention obvie aux inconvénients cités et propose un procédé de fabrication d'un vitrage de sécurité utilisé notamment en tant que pare-brise de véhicule qui présente de bonnes propriétés optiques et biomécaniques et qui les conserve dans des conditions variables de température et d'humidité.

Le vitrage fabriqué selon le procédé de l'invention comprend de même que les vitrages connus cités ci-dessus, une feuille de verre qui peut être trempée, recuite, une couche de matière plastique ayant des propriétés d'absorbeur d'énergie et le cas échéant une couche de revêtement autocicatrisable résistant à la rayure et à l'abrasion.

Le procédé selon l'invention consiste à former directement la couche ayant des propriétés d'absorbeur d'énergie sur la feuille de verre du vitrage par pulvérisation réactive d'un mélange réactionnel d'un composant isocyanate et d'un composant à hydrogènes actifs notamment un composant polyol, le composant isocyanate comprenant au moins un diisocyanate aliphatique, cycloaliphatique ou un prépolymère de diisocyanate, ce composant ayant une viscosité inférieure à environ 5 Pas à + 40°C, le composant polyol comprenant au moins un polyol long difonctionnel de masse moléculaire comprise entre 500 et 4000 et au moins un diol court en tant qu'agent d'allongement de chaîne, au moins un des deux composants isocyanate ou polyol permettant la formation de liaisons de réticulation dans la couche.

Par pulvérisation réactive on entend une pulvérisation pour former une couche ou un film d'un mélange liquide des composants à l'état de monomères ou de prépolymères, suivie d'une polymérisation de ce mélange par la chaleur. Cette pulvérisation réactive qui fournit à la couche ses bonnes propriétés mécaniques et optiques et des liaisons de réticulation sera décrite plus complètement dans la suite de la description.

Les proportions des composants à pulvériser du polyuréthane sont choisies pour obtenir de préférence un système stoechiométriquement équilibré, c'est-à-dire que le rapport des groupements équivalents NCO apportés par le composant diisocyanate aux groupements équivalents OH apportés par le composant polyol, c'est-à-dire le ou les polyols longs et le ou les diols courts est de l'ordre de 1. Lorsque le rapport NCO/OH est inférieur à 1, plus il décroît et plus les propriétés mécaniques recherchées pour l'application deviennent rapidement peu satisfaisantes. Lorsque tous les composants du polyuréthane sont difonctionnels, la limite inférieure de rapport NCO/OH pour l'obtention de propriétés mécaniques satisfaisantes se si tue à 0,9 environ. Lorsqu'un des composants au moins est trifonctionnel cette limite inférieure peut être baissée jusqu'à environ 0,8. Lorsque le rapport NCO/OH est supérieur à 1, plus il croît et plus certaines propriétés mécaniques de la couche obtenue par pulvérisation réactive sont renforcées, par exemple la couche devient plus rigide, mais étant donné le coût plus élevé du composant isocyanate par rapport à celui du composant polyol, le choix de

ces rapports NCO/OH sensiblement égal à 1 est un bon compromis entre les propriétés obtenues et le coût.

Les proportions entre le polyol long et le diol court peuvent varier en fonction des propriétés désirées et aussi du rapport des groupements équivalents, le nombre des groupements équivalents ort dus au diol court représentant cependant généralement de 20 à 70 % des groupements équivalents totaux du mélange formant le composant polyol dans le cas où le rapport des groupements équivalents NCO sur les groupements OH est de l'ordre de 1. Lorsqu'on augmente la proportion du diol court on durcit la couche et on augmente généralement son module.

Les diisocyanates convenables utilisés dans le cadre de l'invention sont choisis notamment parmi les isocyanates difonctionnels aliphatiques suivants: hexaméthylènediisocyanate (HMDI), 2,2,4-triméthyl 1,6-hexanediisocyanate (TMDI), bis 4-isocyanatocyclo-hexylméthane (Hylène W), bis 3-méthyl-4-isocyanatocyclohexylméthane, 2,2 bis (4-isocyanatocyclohexyl) propane, 3-isocyanatométhyl-3,5,5 triméthylcyclohexylisocyanate (IPDI), m-xylylènediisocyanate (XDI), m- et p-tétraméthylxylylènediisocyanate (m- et p- TMXDI), trans-cyclohexane-1,4 diisocyanate (CHDI), 1,3 (diisocyanatométhyl)-cyclonexane (XDI hydrogéné).

On utilise de préférence de l'IPDI seul ou en mélange notamment pour des raisons de prix de revient.

Sous un des aspects de l'invention, on utilise un composant isocyanate contenant des fonctions urées. Ces fonctions urées améliorent certaines propriétés mécaniques de la couche. Le taux d'urée peut représenter jusqu'à environ 10 % du poids total du composant isocyanate à fonctions urées. De préférence le taux d'urée est compris entre 5 et 7 % du poids total dudit composant. Pour la raison invoquée précédemment on utilise de préférence seul ou en mélange du 3-isocyanatométhyl-3,5,5 triméthylcyclohexylisocyanate comportant des fonctions urées (IPDI et dérivés).

Les polyols longs convenables sont choisis parmi des polyétherdiols ou des polyesterdiols de masse moléculaire 500 - 4000; les polyesterdiols étant les produits d'estérification d'un diacide tel que l'acide adipique, succinique, palmitique, azelaïque, sébacique, ophtalique, et d'un diol tel un éthylèneglycol, propanediol-1,3, butanediol - 1,4, hexanediol- 1,6, les polyétherdiols de formule générale

$$H\text{-}[O\ (CH_2)n]\text{-}m\ OH$$

avec n = 2 à 6; m tel que la masse moléculaire soit située dans l'intervalle 500 - 4000, ou les polyétherdiols de folle générale

$$H\text{-}[\overset{\displaystyle CH_3}{\overset{|}{OCH}} - CH_2]\text{-}m\ OH$$

avec m tel que la masse moléculaire soit située également dans l'intervalle 500 - 4000. On peut encore utiliser des polycaprolactonediols.

On utilise de préférence un polytétraméthylèneglycol (n = 4) de masse moléculaire 1000.

Les agents d'allongement de chaînes convenables sont des diols courts de masse moléculaire inférieure à environ 300 et de préférence inférieure à 150, tels que les: éthylèneglycol, propanediol-1,2, propanediol-1,3, butanediol-1,2, -1,3, -1,4, diméthyl-2,2 propanediol-1,3 (néopentylglycol), pentanediol-1,5, hexanediol-1,6, octanediol-1,8, décanediol-1,10, dodécanediol-1,12, cyclohexanediméthanol, bisphénol A, méthyl-2 pentanediol-2, 4, méthyl-3 pentanediol-2,4, éthyl-2 hexanediol-1,3, triméthyl-2,2,4-pentanediol-1,3, diéthylèneglycol, triéthylèneglycol, tétraéthylèneglycol, butyne-2-diol-1,4, butènediol-1,4 et décynediol substitués et/ou éthérifiés, hydroquinone-bis-hydroxyéthyléther, bisphénol A éthérifiés par deux ou quatre groupes d'oxyde de propylène, acide diméthylolpropionique. En général plus le diol est court plus la couche est dure.

On utilise de préférence le butanediol-1,4 qui est un bon compromis pour l'obtention d'une couche ni trop dure, ni trop souple, que l'on recherche pour ce type d'application en tant qu'absorbeur d'énergie.

Une des caractéristiques de la couche ayant des propriétés d'absorbeur d'énergie est qu'elle est obtenue par pulvérisation réactive. Cette pulvérisation réactive fournit dans le cas de composants de départ difonctionnels une couche qui n'est pas entièrement thermoplastique lorsque le rapport des groupements NCO/OH est sensiblement égal à 1.

La pulvérisation réactive implique une réaction de polymérisation rapide pour que la couche soit formée en des temps compatibles avec une fabrication industrielle. Ceci nécessite une température élevée, de l'ordre de 80 à 140°C environ, température à laquelle des réactions secondaires de ramification se produisent créant par exemple des groupements allophanates et/ou biurets entre les chaines d'uréthane, telles que:

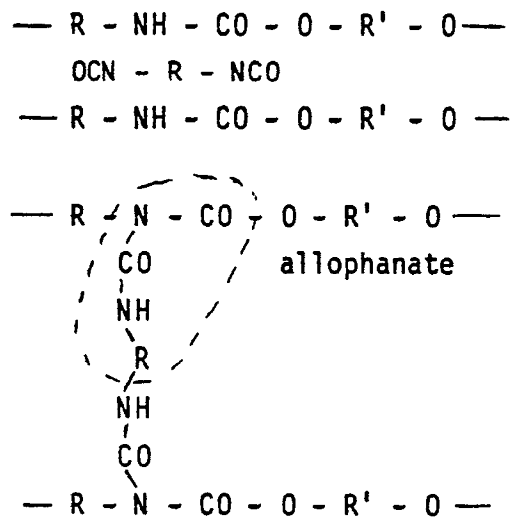


ou

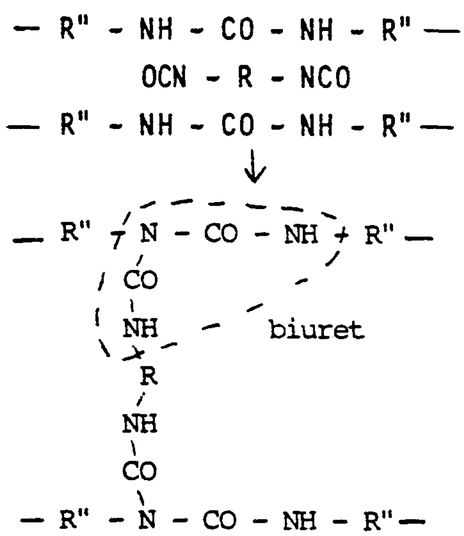


Dans ces conditions opératoires, mêmes avec des composants difonctionnels, lorsque le rapport NCO/OH est sensiblement égal à 1 comme indiqué précédemment, le produit obtenu n'est pas complètement thermoplastique, en effet il est infusible et insoluble dans la plupart des solvants des polyuréthanes tel que le tétrahydrofurane, le diméthylformamide. Ceci ne présente pas d'inconvénient, car le film ou la feuille est déjà formé; au contraire, on en tire comme avantage des propriétés néciques améliorées à formulation égale par rapport à un système équivalent polymérisé à basse température où seule une polycondensation linéaire se produit.

Lorsque le rapport NCO/OH est inférieur à 1 et de l'ordre de 0,8 à 0,9, une réticulation du type décrit ci-dessus ne se produit que de façon insignifiante.

Le composant polyol peut contenir une proportion d'au moins un polyol de fonctionnalité supérieure à deux et notamment des triols aliphatiques monomères tels le glycérol, le triméthylolpropane, des triols à chaînes polyéther, des triols de polycaprolactone, la masse moléculaire de ces triols étant généralement comprise entre 90 et 1000, des polyols mixtes polyéther/polyester de fonctionnalité supérieure à 2, par exemple de fonctionnalité crise entre 2 et 3. L'ajout d'un polyol de fonctionnalité supérieure à 2, provoque des liaisons de pontage supplémentaires entre les chaînes du polyuréthane et peut ainsi encore améliorer la cohésion de la couche.

Les proportions entre le polyol long, le diol court et éventuellement le polyol de fonctionnalité supérieure à 2 peuvent varier selon les propriétés désirées. On choisit généralement des proportions telles que pour un équivalent hydroxyle, le polyol long représente environ de 0,30 à 0,45 équivalent, le diol court d'environ 0,2 à 0,7

équivalent et le polyol de fonctionnalité supérieure à 2 environ 0 à 0,35 équivalent.

Suivant une autre réalisation de la couche AE de l'invention, le composant isocyanate peut contenir dans des proportions limitées, par exemple inférieures à 15 % en équivalent NCO, au moins un triisocyanate tels un biuret d'isocyanate ou un triisocyanurate.

Sous un aspect de l'invention, une partie du composant polyol peut être remplacée par un produit à hydrogènes actifs différents tel une amine.

La pulvérisation selon l'invention peut être réalisée par tout système procurant une couche homogène en épaisseur mais aussi en composition. Ce peut être une pulvérisation électrostatique.

Sous un des aspects de l'invention, la pulvérisation est une pulvérisation centrifuge à grande vitesse que l'on effectue à l'aide d'une tête de pulvérisation tel un bol tournant à une vitesse comprise entre 1000 et 80 000 tours/minute.

Pour éviter une polymérisation prématurée, on forme avantageusement le mélange réactionnel du composant polyol et du composant isocyanate directement dans la tête de pulvérisation.

Sous un aspect avantageux de l'invention on effectue la pulvérisation sur la feuille de verre que l'on a chauffée au préalable. On obtient ainsi un bon nappage par exemple lorsque la température du support est comprise entre 25° C et 70° C environ.

Si les propriétés de surface de la couche ayant des propriétés d'aborbeur d'énergie obtenue par pulvérisation ne sont pas suffisante pour certaines applications, il peut être nécessaire de former une couche de recouvrement supplémentaire ayant des propriétés de surface, autocicatrisable et résistant à la rayure par pulvérisation réactive.

La couche de recouvrement autocicatrisable résistante à la rayure en matière plastique que l'on désigne encore dans l'application selon l'invention par couche de protection interne (couche PI) est pour sa composition par exemple celle décrite dans les publications de brevets françaises 2 187 719 et 2 251 608. Cette couche autocicatrisable a dans les conditions normales de température, une haute capacité de déformation élastique, un faible module d'élasticité, inférieur à 2000 daN/cm$^2$ et de préférence inférieur à 200 daN/cm$^2$, et un allongement à la rupture de plus de 60 % avec moins de 2 % de déformation plastique et de préférence un allongement à la rupture de plus de 100 % avec moins de 1 % de déformation plastique. Les coudes préférées de ce type sont des polyuréthanes thermodurcissables ayant un module d'élasticité d'environ 25 à 200 daN/cm$^2$ et un allongement d'environ 100 à 200 % avec moins de 1 % de déformation plastique.

Des exemples de monomères qui conviennent pour la préparation de ces polyuréthanes thermodurcissables par pulvérisation réactive selon l'invention sont d'une part les isocyanates difonctionnels aliphatiques contre le 1,6-hexanediisocyanate, le 2,2,4-triméthyl-1,6-hexanediisocyanate, le 2,4,4-triméthyl-1,6 hexanediisocyanate, le 1,3-bis (isocyanatométhyl)benzène, le bis (4-isocyanatocyclohexyl)méthane, le bis (3-methyl-4-isocyanatocyclohexyl)méthane, le 2,2-bis(4-isocyatocyclohexyl)propane et le 3-isocyanato-méthyl-3,5,5-triméthylcyclohexylisocyanate, ainsi que les biurets, isocyanurates et prépolymères de ces composés ayant une fonctionnalité supérieure à 2 et d'autre part les polyols polyfonctionnels, contre les polyols ramifiés tels que les polyesterpolyols et polyétherpolyols obtenus - par réaction d'alcools polyfonctionnels, notamment le 1,2,3-propanetriol (glycérol), le 2,2-bis(hydroxyméthyl)-1-propanol (triméthyloléthane), le 2,2-bis (hydroxyméthyl)-1-butanol (triméthylolpropane), le 1,2,4,-butane-triol, le 1,2,6-hexane-triol, le 2,2-bis (hydroxyméthyl)-1,3-propanediol (pentaérythritol) et le 1,2,3,4,5,6-hexane-hexol (sorbitol), avec des diacides aliphatiques comme l'acide malonique, l'acide succinique, l'acide glutarique, l'acide adipique, l'acide subérique et l'acide sébacique ou avec des éthers cycliques, contre l'oxyde d'éthylène, l'oxyde de 1,2-propylène et le tétrahydrofurane.

Le poids moléculaire des polyols ramifiés est avantageusement d'environ 250 à 4000 et de préférence d'environ 450 à 2000. Des mélanges de différents polyisocyanates et polyols monomères peuvent être utilisés. In polyuréthane thermodurcissable particulièrement préféré est celui décrit dans la publication de brevet française 2 251 608.

Lorsque le vitrage est utilisé en tant que pare-brise de véhicule à moteur, la couche ayant des propriétés d'absorbeur d'énergie (couche AE) présente généralement une épaisseur supérieure à environ 0,4 mm. Pour d'autres applications, cette épaisseur peut être éventuellement inférieure. L'épaisseur de la couche PI peut varier plus largement, en étant crise entre 0 à 0,5 mm environ et de préférence entre 0,02 à 0,4 mm environ.

La couche ayant des propriétés d'absorbeur d'énergie et le cas échéant la couche PI peuvent contenir divers additifs qui servent généralement à faciliter leur fabrication par pulvérisation réactive, ou qui peuvent éventuellement améliorer encore certaines de leur propriétés.

Elles peuvent contenir un catalyseur tel un catalyseur d'étain par exemple le dibutyldilaurate d'étain, l'oxyde de tributylétain, l'octoate d'étain, un catalyseur organomercurique par exemple l'ester phenyl mercurique, un catalyseur amine par exemple le diazabicyclo-(2,2,2)-octane, le 1,8 diazabicyclo-(5,4,0)-1 decene-7.

Ces couches peuvent contenir un stabilisant tel le bis (2,2,6,6-tétraméthyl-4 piperidyl) sebaçate, un antioxydant phénolique.

Elles peuvent contenir également un agent nappant tel une résine silicone, un ester fluoroalkylé, une résine acrylique.

L'invention concerne également un dispositif constituant une ligne pour la fabrication d'un vitrage de sécurité comprenant une feuille de verre et au moins une couche de matière plastique présentant des propriétés d'absorbeur d'énergie obtenue par pulvérisation d'un mélange de composants réactionnels.

La ligne de fabrication comporte plusieurs zones: une zone de pulvérisation, une zone de polymérisation de la matière apportée et le cas échéant une zone de traitement thermique ou chimique préalable pour la feuille

de verre à revêtir.

Selon l'invention, la ligne de fabrication comprend un convoyeur pour le transfert des feuilles de verre à revêtir, le cas échéant des moyens pour préparer ou traiter les feuilles de verre à revêtir, ces moyens étant disposés dans la partie amont de la ligne notamment au-dessus du convoyeur, des moyens pour pulvériser le mélange réactionnel à partir duquel est formée la couche AE, des moyens pour la polymérisation de la couche formée. Suivant une réalisation avantageuse du dispositif, l'ensemble de la ligne de fabrication est placé dans une longue enceinte divisée en compartiments correspondant aux différentes zones.

Les moyens pour pulvériser le mélange réactionnel sont avantageusement un pulvérisateur à tête tournante à grande vitesse.

Les moyens pour préparer la feuille de verre avant la pulverisation peuvent être des moyens de chauffage. Ces moyens peuvent être des rampes infra-rouge, capables de chauffer les feuille de verre à revêtir à une température adéquate.

Ces moyens pour préparer la feuille de verre peuvent être aussi des moyens pour traiter chimiquement la face recevant la pulvérisation, par exemple des moyens pour traiter ladite surface à l'aide d'un promoteur d'adhésion tel un organo-silane.

Pour éviter des défauts optiques dus à la présence de corps étrangers dans la couche obtenue par pulvérisation, la ligne peut encore comprendre des moyens empêchant les grains de poussières et autres particules de se déposer sur la feuille de verre à recouvrir, avant la pulvérisation ou sur la couche obtenue par pulvérisation, et aussi des moyens de nettoyage pour éliminer ces grains de poussières éventuellement déposés.

Les moyens pour éviter le dépôt de particules indésirables peuvent être des écrans physiques. Ainsi on peut placer l'ensemble de la ligne de fabrication, ou des parties de cette ligne, dans une ou plusieurs enceintes contenant de l'air filtré et dépoussiéré.

Les moyens pour éviter le dépôt de particules peuvent être aussi des barres électrostatiques qui ionisent l'atmosphère autour du vitrage en cours de fabrication et fabriqué.

Dans la variante mettant en jeu une pulvérisation électrostatique, le dispositif comprend un pulvérisateur adapté en conséquence.

D'autres caractéristiques et avantages ressortiront de la description suivante d'exemples du dispositif selon l'invention.

La figure 1 représente schématiquement une ligne pour la fabrication de vitrages comprenant une feuille de verre et une couche AE obtenue par pulvérisation réactive.

La figure 2 représente, en section une tête de pulvérisation pouvant être utilisée dans le cadre de l'invention.

La figure 3 représente schématiquement une ligne pour la fabrication de vitrages comprenant une feuille de verre, une couche AE et une couche PI obtenues toutes deux par pulvérisation réactive.

La ligne de fabrication représentée sur la figure 1 est constituée d'une longue enceinte 1 découpée en compartiments correspondant aux zones de traitement et traversée par un convoyeur 2 formé également de plusieurs parties pour le transport des vitrages 3. Les vitrages sont disposés horizontalement sur des supports 4 adaptés à leur forme. La partie amont 5 du convoyeur formée d'un tapis sans fin, transporte les vitrages à travers le compartiment 6 correspondant à la zone de traitement thermique préalable. Ce compartiment 6 est équipé de moyens de chauffage 7 disposés en surplomb du convoyeur. Ces moyens de chauffage sont ici des rampes à infra-rouge.

Une partie intermédiaire 8 du convoyeur transporte les vitrages du compartiment de traitement thermique 6 au compartiment 9 correspondant à la zone de pulvérisation. La zone de pulvérisation est formée d'une cabine étanche aux poussières et autres particules comme les autres éléments de l'enceinte 1: cette zone est équipée de moyens de pulvérisation centrifuge 10 dont la tête 11 comprend un bol tournant à grande vitesse, comme décrit par la suite. Sous le tapis à câbles 12 formant la partie du convoyeur dans la zone de pulvérisation, est disposé un réservoir 13 qui recueille l'excédent du melange réactionnel pulvérisé.

Un autre transporteur intermédiaire 14 effectue le transfert des vitrages revêtus jusqu'au tunnel 15 correspondant à la zone de polymérisation. Dans cette zone, les vitrages transportés par la partie aval du convoyeur constitué également d'un tapis sans fin 16, sont chauffés par des moyens de chauffage tels des résistances électriques 17 qui assurent la polymérisation de la couche pulvérisée 18.

La ligne de fabrication comprend, en divers emplacements, des moyens pour éliminer l'électricité statique dans l'environnement des vitrages à revêtir ou revêtus par la couche pulvérisée. Ces moyens peuvent être des barres électrostatiques 19 connues en soi.

La ligne peut aussi comprendre des moyens de nettoyage (non représentés) pour éliminer les poussières et autres particules déposées sur le vitrage à revêtir ou revêtu.

La tête 11 du dispositif de pulvérisation centrifuge à grande vitesse représentée sur la figure 2 comporte une partie mobile 20 constituée du bol tournant 21 proprement dit, solidaire d'un mandrin 22 porteur d'un plateau 23, et d'une partie fixe 24 perçée de deux conduits 25 et 26 d'alimentation pour les composants, ces conduits débouchant dans la partie centrale du plateau 23.

Afin d'augmenter la longueur du parcours pour le mélange des deux composants introduits par les conduits 25 et 26 et aussi améliorer ce mélange avant la pulvérisation, le bol présente une surface interne 27 dont la génératrice est ondulée d'une part, et le plateau 23 porte des aspérités ou nervures 28 dirigées vers le haut formant chicanes, d'autre part.

La figure 3 représente une ligne pour la fabrication de vitrages de sécurité comprenant une feuille de verre,

une couche ayant des propriétés d'absorbeur d'énergie et une couche de recouvrement presentant des propriétés de surface améliorées, ces deux couches étant obtenues selon l'invention par pulvérisation réactive de mélanges réactionnels.

Cette ligne comprend les mêmes éléments que la ligne décrite en relation avec la figure 1, mais elle comprend en outre des moyens pour fabriquer la deuxième couche c'est-à-dire la couche de recouvrement PI, ces moyens étant essentiellement les mêmes que ceux décrits pour fabriquer la première couche, à savoir une zone de pulvérisation 29, équipée de moyens de pulvérisation centrifuge 30 pour former la couche 40 au-dessus de la couche 18 déjà formée, suivie d'une zone de polymérisation 31 unie de résistances électriques 32, et un convoyeur 33 formé de plusieurs parties 34, 35, 36, 37.

**Exemple 1**

On fabrique selon le procédé de l'invention par la mise en oeuvre du dispositif décrit en relation avec la figure 1, un vitrage de sécurité formé d'une feuille de verre bombée de 3 mm d'épaisseur et d'une couche de matière plastique ayant des propriétés d'absorbaur d'énergie (couche AE) de 0,480 mm d'épaisseur.

Le melange à pulvériser, apte à former la couche AE est formé à partir d'un composant polyol et d'un composant isocyanate. On prépare au préalable le composant polyol en mélangeant un polytétraméthylène glycol de masse moléculaire 1000 avec du butanediol-1,4 et du polycaprolactonetriol de masse moléculaire 300, les proportions des trois constituants étant telles que le polytétraméthylèneglycol apporte 0,35 équivalent en groupes hydroxyles, le butanediol-1,4 0,55 et le polycaprolactonetriol 0,10.

Au composant polyol on incorpore un stabilisant à raison de 0,5 % en poids de la masse totale du composant polyol et du composant isocyanate, un agent nappant à raison de 0,05 % en poids calculé de la même facon et un catalyseur, à savoir du dilaurate de dibutylétain à raison de 0,02 % en poids calculé de la même facon que précédemment.

Le composant isocyanate utilisé est du 3-isocyanatométhyl-3,5,5, triméthylcyclohexylisocyanate (IPDI) présentant des fonctions urées obtenues par hydrolyse partielle de l'IPDL et ayant une teneur en groupements NCO d'environ 31,5 % en poids.

Les composants sont pris en quantités telles que le rapport NCO/OH est de 1.

Les feuilles de verre bombées sont disposées horizontalement sur des supports adaptés à leur forme. Le convoyeur transporte les feuilles de verre d'abord dans la zone de traitement thermique où elles sont chauffées à une température d'environ 55°C. Les feuilles de verre sont ensuite amenées dans le compartiment de pulvérisation.

Au poste de pulvérisation, les feuilles de verre reçoivent une pulvérisation du mélange réactionnel décrit précédemment.

La pulvérisation centrifuge est effectuée alors que le mélange réactionnel est à 25°C environ, à l'aide d'un bol tournant à une vitesse d'environ 20 000 tours/mn, le diamètre du bol étant d'environ 65 mm, et la pression de soufflage guidant les particules, c'est-à-dire la pression de l'air dirigé selon une forme conique en sortie du bol est d'environ 1,5 kg. On forme ainsi une couche de 0,480 mm d'épaisseur. Les vitrages sont ensuite acheminés dans le tunnel de polymérisation où ils sont soumis à une température de 120°C durant 25 min environ.

Le vitrage obtenu présente une excellente qualité optique et une transparence parfaite.

L'adhérence obtenue entre la feuille de verre et la couche de matière plastique est mesurée par un test de pelage décrit ci-dessous.

On découpe une bande de 5 cm de large sur la couche de matière plastique. On décolle l'extrémité de la bande sur laquelle on effectue une traction perpendiculaire à la surface de vitrage, avec une vitesse de 5 cm par minute. L'opération est réalisée à + 20°C. On note la force de traction moyenne nécessaire au décollement de la bande. En opérant ainsi, on obtient une force de traction de 11 daN/5 cm.

Des essais de résistance au choc à différentes températures sont réalisés sur le vitrage fabriqué selon l'exemple.

Un premier essai de résistance au choc est effectué à + 20°C avec une bille d'acier d'un poids de 2,260 kg (test de la grosse bille) que l'on fait tomber sur la partie centrale d'un échantillon de vitrage feuilleté de 30,5 cm de côté, maintenu sur un cadre rigide. On détermine la hauteur approximative, pour laquelle 90 % des échantillons testés à la température choisie résistent à la chute de bille sans être traversés.

Pour le vitrage feuilleté selon l'exemple la valeur obtenue est de 5 mètres.

Un autre essai de résistance au choc est effectué avec une bille d'acier de 0,227 kg et de 38 mm de diamètre. Un essai est réalisé à une température de - 20°C. Un autre essai est réalisé à une température de + 40°C. Les valeurs obtenues sont respectivement de 13,5 et de 9 mètres.

Ces valeurs sont satisfaisantes ce tenu de la norme européenne R43 en vigueur, les résultats recherchés étant d'au moins 4 mètres à la grosse bille, d'au moins 8,5 mètres à la petite bille à - 20°C et d'au moins 9 mètres à la petite bille à + 40°C.

**Exemple 2**

On fabrique selon le procédé de l'invention par la mise en oeuvre du dispositif décrit en relation avec la figure 3, un vitrage de sécurité formé d'une feuille de verre bombée de 3 mm d'épaisseur, d'une couche de matière plastique ayant des propriétés d'absorbeur d'énergie (couche AE) de 0,550 mm d'épaisseur et d'une couche de matière plastique ayant des propriétés de surface (couche PI) de 0,070 mm d'épaisseur, ces deux couches étant formées par pulvérisations réactives.

Le mèlange réactionnel utilisé pour former la couche AE est le même que celui utilisé dans l'exemple 1.

Le mélange réactionnel utilisé pour former la couche PI est formé à partir d'un composant polyol et d'un composant isocyanate en présence d'un stabilisant, d'un catalyseur et d'un agent nappant pris dans les proportions suivantes:

- 100 g d'un polyétherpolyol d'un poids moléculaire d'environ 450 obtenu par condensation d'oxyde de 1,2-propylène avec du 2,2-bis (hydroxyméthyl)-1-butanol et ayant une teneur en radicaux hydroxyles libres d'environ 10,5 à 12 %,
- 5,2 g d'un stabilisant aux UV,
- 0,05 g de dilaurate de dibutylétain en tant que catalyseur et 0,2 g d'un ester fluorcalkylé en tant qu'agent nappant,
- 102 g d'un biuret de 1,6-hexaméthylènediisocyanate ayant une teneur en radicaux isocyanates libres d'environ 23,2 %.

Le composant polyol présente une viscosité d'environ 620 centipoises à 25°C alors que le composant isocyanate présente une viscosité d'environ 2300 centipoises. Le stabilisant, le catalyseur et l'agent nappant sont ajoutés au préalable au composant polyol.

Les feuilles de verre bombées sont disposées horizontalement sur des supports adaptés à leur forme. Le convoyeur transporte les feuilles de verre d'abord dans la zone de traitement thermique où elles sont chauffées à une température d'environ 55°C. Les feuilles de verre sont ensuite amenées dans le compartiment de pulvérisation où elles reçoivent une pulvérisation du mélange réactionnel décrit ci-dessus pour former la couche AE. La pulvérisation est effectuée comme dans l'exemple 1. Les vitrages sont ensuite acheminés dans le tunnel de polymérisation où ils sont soumis à une température de 120°C durant 20 min environ. Après refroidissement à 55°C dans le compartiment intermédiaire, les vitrages arrivent ensuite au poste de pulvérisation pour la formation de la couche PL. La pulvérisation centrifuge est effectuée alors que le mélange réactionnel décrit ci-dessus, apte à former cette couche PL, est à environ 25°C, à l'aide d'un bol tournant à une vitesse d'environ 20 000 tours/min le diamètre du bol étant d'environ 65 mm. On forme ainsi une couche PL de 0,070 mm environ qui est polymérisée dans le tunnel de polymérisation où les vitrages sont soumis à une température de 100°C environ pendant 20 minutes.

Les vitrages obtenus présentent une bonne qualité optique et les caractéristiques mécaniques suivantes:

- le test du pelage fournit une valeur de 11 daN/5 cm,
- le test de la grosse bille et les deux essais à la petite bille donnent les valeurs respectives de 5, 13,5 et 10 mètres.

La résistance à la rayure de la couche PI est mesurée d'après le test connu sous l'appellation "Mar Resistance Test" pratiqué avec l'appareil ERICHSEN, type 413. On mesure la charge à porter sur une tête diamantée pour introduire une rayure persistante sur la couche de matière plastique de revêtement.

La résistance à la rayure est ici de 20 g. On mesure la résistance à l'abrasion de la couche PI, selon la norme européenne R 43. A cet effet, on fait subir au vitrage recouvert par la couche de protection PI une abrasion à l'aide d'une meule abrasive. Après 100 tours d'abrasion, on mesure avec un spectrophotomètre l'écart de flou entre la partie abrasée et la partie non abrasée.

L'écart de flou doit être inférieur à 4 %. La valeur obtenue pour le vitrage selon l'exemple est de 3,5 %.

## Revendications

1. Procédé de fabrication d'un vitrage feuilleté comprenant une feuille de verre, une couche transparente à base d'un polyuréthane ayant des propriétés d'absorbeur d'énergie, caractérisé en ce que la couche à base d'un polyuréthane ayant des propriétés d'absorbeur d'énergie est formée directement sur la feuille de verre par pulvérisation réactive d'un mélange réactionnel d'un composant isocyanate d'une viscosité inférieure à 5 Pas à 40°C et d'un composant polyol, le composant isocyanate comprenant au moins un diisocyanate aliphatique ou cycloaliphatique ou un prépolymère de ces isocyanates, le composant isocyanate contenant des fonctions urées, le taux d'urée pouvant atteindre 10 % du poids total du composant isocyanate, de préférence ce taux durée étant compris entre 5 et 7 %, le composant polyol comprenant au moins un polyol long difonctionnel de masse moléculaire comprise entre 500 et 4000 et au moins un diol court en tant qu'agent

d'allongement de chaîne, le rapport des groupements équivalents isocyanates aux groupements équivalents hydroxyles étant environ égal à 1, les proportions entre les différents polyols étant choisies telles que le nombre de groupements hydroxyles équivalents dus au diol court représente de 20 à 70 % du total des groupements hydroxyles.

2. Procédé de fabrication d'un vitrage feuilleté comprenant une feuille de verre, une couche transparente à base d'un polyuréthane ayant des propriétés d'absorbeur d'énergie, caractérisé en ce que la couche à base d'un polyuréthane ayant des propriétés d'absorbeur d'énergie est formée directement sur la feuille de verre par pulvérisation réactive d'un mélange réactionnel d'un composant isocyanate d'une viscosité inférieure à 5 Pas à 40°C et d'un composant polyol, le composant isocyanate comprenant au moins un diisocyanate aliphatique ou cycloaliphatique ou un prépolymère de ces isocyanates, le composant polyol comprenant au moins un polyol long difonctionnel de masse moléculaire comprise entre 500 et 4000, au moins un diol court en tant qu'agent d'allongement de chaîne, au moins un polyol de fonctionnalité supérieure à 2 le rapport des groupements équivalents isocyanates aux groupements équivalents hydroxyles étant environ égal à 1, les proportions entre les différents polyols étant choisies telles que le nombre de groupements hydroxyles équivalents dus au diol court représente de 20 à 70 % du total des groupements hydroxyles.

3. Procédé selon une des revendications 1 ou 2, caractérisé en ce que le composant isocyanate comprend du 3-isocyanatométhyl-3,5,5-triméthylcyclohexylisocyanate.

4. Procédé selon une des revendications 1 à 3, caractérisé en ce que le composant isocyanate est formé essentiellement de 3-isocyanatométhyl-3,5,5-triméthylcyclohexylisocyanate présentant des groupements urées et en ce que le polyol long est formé essentiellement de polytétraméthylèneglycol de masse moléculaire d'environ 1000 et le diol court de butanediol-1,4.

5. Procédé selon l'une des revendications 1 à 4, caractérisé en ce que pour un équivalent d'hydroxyle au total pour le composant polyol du polyuréthane ayant des propriétés d'absorbeur d'énergie, le polyol long représente 0,30 à 0,45 équivalent, le diol court 0,2 à 0,7 équivalent et le polyol de fonctionnalité supérieure à 2 de 0 à 0,35 équivalent.

6. Procédé selon une des revendications 1 à 5, caractérisé en ce que la couche de polyuréthane ayant des propriétés d'absorbeur d'énergie comprend des additifs tel un catalyseur, un agent nappant, un stabilisant.

7. Procédé selon une des revendications 1 à 6, caractérisé en ce que la pulvérisation est une pulvérisation centrifuge à grande vitesse.

8. Procédé selon la revendication 7, caractérisé en ce que la pulvérisation centrifuge est effectuée à l'aide d'un bol tournant à une vitesse comprise entre 1000 et 80 000 tours/min.

9. Procédé selon une des revendications 7 ou 8, caractérisé en ce qu'on effectue le mélange des composants réactionnels directement dans la tête de pulvérisation.

10. Procédé selon une des revendications 1 à 9, caractérisé en ce qu on forme sur la couche ayant des propriétés d'absorbeur d'énergie obtenue une couche de recouvrement ayant des propriétés de surface, autocicatrisable et résistante à la rayure par pulvérisation réactive d'un mélange réactionnel.

11. Procédé selon la revendication 10, caractérisé en ce que le mélange réactionnel pulvérisé forme un polyuréthane thermodurcissable.

12. Procédé selon une des revendications 10 ou 11, caractérisé en ce que la pulvérisation réactive est une pulvérisation centrifuge à grande vitesse.

13. Vitrage feuilleté obtenu par la mise en oeuvre du procédé selon une des revendications 1 à 12.

## Patentansprüche

1. Verfahren zur Herstellung eines eine Glasscheibe und eine transparente Schicht auf Polyurethanbasis mit energieabsorbierenden Eigenschaften umfassenden Verbundglases,

dadurch gekennzeichnet, daß die Schicht auf Polyurethanbasis mit energieabsorbierenden Eigenschaften direkt auf der Glasscheibe durch reaktives Aufstäuben eines Reaktionsgemisches aus einer Isocyanatkomponente mit einer Viskosität von weniger als 5 Pas bei 40°C und aus einer Polyolkomponente gebildet wird, wobei die Isocyanatkomponente wenigstens ein aliphatisches oder cycloaliphatisches Diisocyanat oder ein Vorpolymerisat aus diesen Isocyanaten umfaßt und die Isocyanatkomponente Harnstoffgruppen enthält, wobei der Harnstoffanteil bis zu 10 %, vorzugsweise zwischen 5 und 7 %, vom Gesamtgewicht der Isocyanatkomponente betragen kann, die Polyolkomponente wenigstens ein bifunktionelles langes Polyol mit einem Molekulargewicht zwischen 500 und 4000 und wenigstens ein kurzes Diol als Kettenverlängerungsmittel enthält, und das Verhältnis der Isocyanatgruppen-Äquivalente zu den Hydroxylgruppen-Äquivalenten bei etwa 1 liegt, wobei die Mengenverhältnisse zwischen den verschiedenen Polyolen so gewählt sind, daß die Anzahl der durch das kurze Diol bedingten Hydroxylgruppen-Äquivalente etwa 20 bis 70 % von der Gesamtheit der Hydroxylgruppen beträgt.

2. Verfahren zur Herstellung eines eine Glasscheibe und eine transparente Schicht auf Polyurethanbasis mit energieabsorbierenden Eigenschaften umfassenden Verbundglases,

dadurch gekennzeichnet, daß die Schicht auf Polyurethanbasis mit energieabsorbierenden Eigenschaften direkt auf der Glasscheibe durch reaktives Aufstäuben eines Reaktionsgemisches aus einer Isocyanatkomponente mit einer Viskosität von weniger als 5 Pas bei 40°C und aus einer Polyolkomponente gebildet wird,

wobei die Isocyanatkomponente wenigstens ein aliphatisches oder cycloaliphatisches Diisocyanat oder ein Vorpolymerisat aus diesen Isocyanaten umfaßt, die Polyolkomponente wenigstens ein bifunktionelles langes Polyol mit einem Molekulargewicht zwischen 500 und 4000, wenigstens ein kurzes Diol als Kettenverlängerungsmittel und wenigstens ein Polyol mit einer Funktionalität von mehr als 2 enthält, wobei das Verhältnis der Isocyanatgruppen-Äquivalente zu den Hydroxylgruppen-Äquivalenten bei etwa 1 liegt und die Mengenverhältnisse zwischen den verschiedenen Polyolen so gewählt sind, daß die Anzahl der durch das kurze Diol bedingten Hydroxylgruppen-Äquivalente etwa 20 bis 70 % von der Gesamtheit der Hydroxylgruppen beträgt.

3. Verfahren nach Anspruch 1 oder 2, dadurch gekennzeichnet, daß die Isocyanatkomponente 3-Isocyanatmethyl-3,5,5-tri-methylcyclohexylisocyanat enthält.

4. Verfahren nach einem der Ansprüche 1 bis 3, dadurch gekennzeichnet, daß die Isocyanatkomponente im wesentlichen aus Harnstoffgruppen aufweisendem 3-Isocyanatmethyl-3,5,5-trimethylcyclohexylisocyanat gebildet wird und daß das lange Polyol im wesentlichen aus Polytetramethylenglycol mit einem Molekulargewicht von etwa 1000 und das kurze Diol aus Butan-diol-1,4 gebildet wird.

5. Verfahren nach einem der Ansprüche 1 bis 4, dadurch gekennzeichnet, daß für ein Äquivalent eines Hydroxyls insgesamt für die Polyolkomponente des Polyurethans mit energieabsorbierenden Eigenschaften das lange Polyol 0,30 bis 0,45 Äquivalent, das kurze Diol 0,2 bis 0,7 Äquivalent und das Polyol mit der Funktionalität von mehr als 2 zwischen 0 und 0,35 Äquivalent darstellt.

6. Verfahren nach einem der Ansprüche 1 bis 5, dadurch gekennzeichnet, daß die Polyurethanschicht mit den energieabsorbierenden Eigenschaften Zusatzstoffe wie etwa einen Katalysator, ein Netzmittel oder einen Stabilisator enthält.

7. Verfahren nach einem der Ansprüche 1 bis 6, dadurch gekennzeichnet, daß das Aufstäuben durch Fliehkraftzerstäubung mit hoher Geschwindigkeit erfolgt.

8. Verfahren nach Anspruch 7, dadurch gekennzeichnet, daß die Fliehkraftzerstäubung mit Hilfe eines Siebmantels bei einer Umlaufgeschwindigkeit zwischen 1000 und 80 000 U/min erfolgt.

9. Verfahren nach Anspruch 7 oder 8, dadurch gekennzeichnet, daß das Mischen der Reaktionskomponenten unmittelbar im Zerstäuberkopf erfolgt.

10. Verfahren nach einem der Ansprüche 1 bis 9, dadurch gekennzeichnet, daß auf der erhaltenen Schicht mit den energieabsorbierenden Eigenschaften durch reaktives Aufstäuben des Reaktionsgemisches eine selbstheilende, kratzfeste Schutzschicht gebildet wird.

11. Verfahren nach Anspruch 10, dadurch gekennzeichnet, daß das aufgestäubte Reaktionsgemisch ein in Wärme aushärtendes Polyurethan bildet.

12. Verfahren nach Anspruch 10 oder 11, dadurch gekennzeichnet, daß das reaktive Aufstäuben durch Fliehkraftzerstäubung bei hoher Geschwindigkeit erfolgt.

13. Verbundglas, hergestellt mit Hilfe des Verfahrens nach einem der Ansprüche 1 bis 12.

## Claims

1. A method of making a laminated pane comprising a sheet of glass and a transparent layer based upon a polyurethane having energy-absorber properties, characterized in that the layer based upon a polyurethane having energy-absorber properties is formed directly on the sheet of glass by reactive atomization of a reaction mixture of an isocyanate component having a viscosity of less than 5 Pas at 40°C and of a polyol component, the isocyanate component comprising at least one aliphatic or cycloaliphatic diisocyanate or a prepolymer of these isocyanates, the isocyanate component containing urea functions, the urea content being up to 10 % of the total weight of the isocyanate component, the urea content preferably being from 5 to 7 %, the polyol component comprising at least one difunctional long polyol with a molecular weight of 500 to 4000 and at least one short diol as chain lengthening agent, the ratio of the isocyanate equivalent groups to the hydroxyl equivalent groups being approximately equal to 1, the proportions between the different poluols being selected such that the number of equivalent hydroxyl groups due to the short diol amounts to 20 to 70 % of the total of the hydroxyl groups.

2. A method of making a laminated pane comprising a sheet of glass and a transparent layer based upon a polyurethane having energy absorber properties, characterized in that the layer based upon a polyurethane having energy absorber properties is formed directly on the sheet of glass by reactive atomization of a reaction mixture of an isocyanate component with a viscosity of less than 5 Pas at 40°C and of a polyol component, the isocyanate component comprising at least one aliphatic or cycloaliphatic diisocyanate or a prepolymer of these isocyanates, the polyol component comprising at least one difunctional long polyol with a molecular weight of 500 to 4000, at least one short diol as chain lengthening agent, and at least one polyol having a functionality greater than 2, the ratio of the isocyanate equivalent groups to the hydroxyl equivalent groups being approximately equal to 1, the proportions between the different poluols being selected such that the number of equivalent hydroxyl groups due to the short diol amounts to 20 to 70 % of the total of the hydroxyl groups.

3. A method according to one of claims 1 or 2, characterized in that the isocyanate component comprises 3-isocyanatomethyl-3,5,5-trimethyl cyclohexyl isocyanate.

4. A method according to one of claims 1 to 3, characterized in that the isocyanate component is formed essentially of 3-isocyanatomethyl-3,5,5-trimethyl cyclohexyl isocyanate having urea groups and in that the long

polyol is formed essentially of polytetramethylene glycol with a molecular weight of approximately 1000 and the short diol is formed of butane diol-1,4.

5. A method according to one of claims 1 to 4, characterized in that for a hydroxyl equivalent in total for the polyol component of the polyurethane having energy absorber properties, the long polyol represents 0.30 to 0.45 equivalent, the short diol 0.2 to 0.7 equivalent and the polyol having a functionality exceeding 2 represents 0 to 0.35 equivalent.

6. A method according to one of claims 1 to 5, characterized in that the layer of polyurethane having energy absorber properties comprises additives such as a catalyst, a pouring agent, a stabilizer.

7. A method according to one of claims 1 to 6, characterized in that the atomization is a centrifugal atomization at high speed.

8. A method according to claim 7, characterized in that the centrifugal atomization is carried out by means of a bowl rotating at a speed of 1000 to 80000 revolutions per minute.

9. A method according to one of claims 7 or 8, characterized in that the mixing of the reaction components is carried out directly in the atomization head.

10. A method according to one of claims 1 to 9, characterized in that, on the layer having energy absorber properties produced, there is formed by reactive atomization of a reaction mixture a covering layer possessing surface properties, this layer being self-healing and scratch-resistant.

11. A method according to claim 10, characterized in that the atomized reaction mixture forms a thermosetting polyurethane.

12. A method according to one of claims 10 or 11, characterized in that the reactive atomization is a centrifugal atomization at high speed.

13. Laminated pane produced by the carrying out of the method according to one of claims 1 to 12.

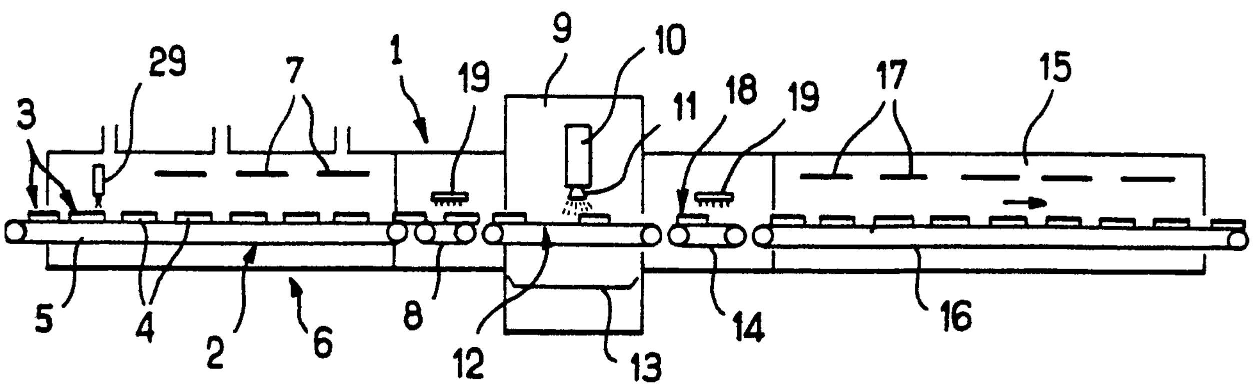


FIG_1

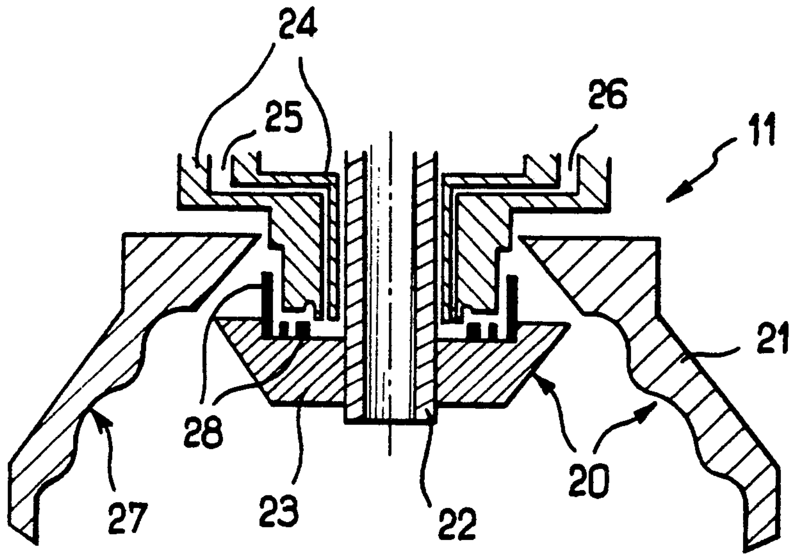


FIG_2

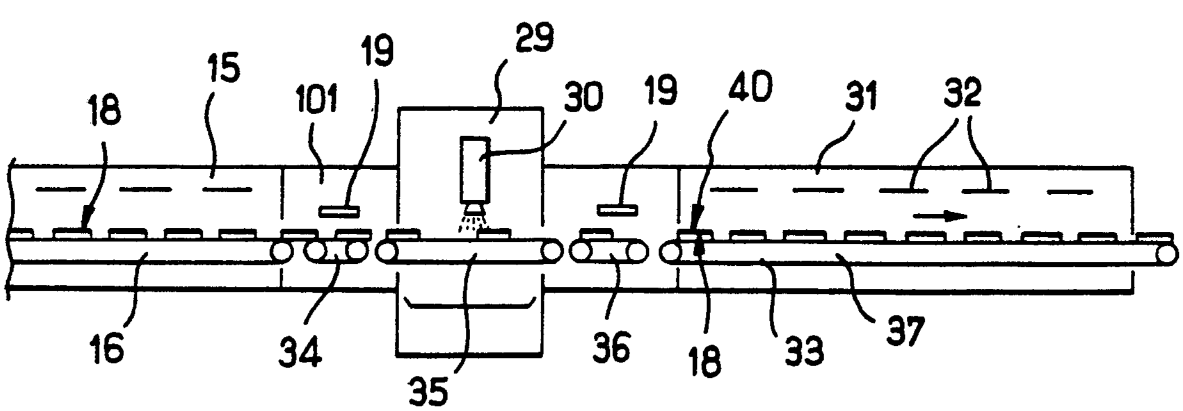


FIG_3